# EUROPÄISCHE PATENTANMELDUNG

(11) **EP 3 527 765 A1**
(43) Veröffentlichungstag der Anmeldung: **21.08.2019**
(21) Anmeldenummer: 19151421.5
(22) Anmeldetag: 11.01.2019
(51) Int. Cl.: E05F 5/02

(54) **DÄMPFERANORDNUNG FÜR EIN KRAFTFAHRZEUG**

(30) Priorität: 20.02.2018 DE 102018202533
(71) Anmelder: VOLKSWAGEN AKTIENGESELLSCHAFT, 38440 Wolfsburg (DE)
(72) Erfinder: Opitz, Oliver, 38444 Wolfsburg (DE); Massarczyk, Björn-Dennis, 38442 Wolfsburg (DE)

(57) **Zusammenfassung**

Die Erfindung betrifft eine Dämpferanordnung (10) für ein Kraftfahrzeug (1), das zumindest einen Innenraum (2), insbesondere einen Motorraum, und zumindest ein beweglich gelagertes Klappenelement (3), insbesondere eine Fronthaube, zum Freigeben oder Verschließen des Innenraums (2), aufweist, mit zumindest einem elastisch verformbaren Dämpferelement (11), das zwischen dem Klappenelement (3) und einem dem Innenraum (2) zugeordneten Rahmenelement (9) in einer den Innenraum (2) verschließenden Schließstellung des Klappenelements (3) mit einer Vorspannkraft (*F_{ν}*) verspannt ist. Dabei ist vorgesehen, dass die Vorspannkraft (*F_{ν}*) zumindest im Wesentlichen quer zur Bewegungsrichtung des Klappenelements (3) wirkt.

## Beschreibung

Die Erfindung betrifft eine Dämpferanordnung für ein Kraftfahrzeug, das zumindest einen Innenraum, insbesondere einen Motorraum, und zumindest ein beweglich gelagertes Klappenelement, insbesondere eine Fronthaube, zum Freigeben und Verschließen des Innenraums aufweist, mit zumindest einem elastisch verformbarem Dämpferelement, das zwischen dem Klappenelement und einem dem Innenraum zugeordneten Rahmenelement einer Fahrzeugkarosserie des Kraftfahrzeugs in der den Innenraum verschließenden Schließstellung des Klappenelements mit einer Vorspannkraft verspannt ist.

Dämpferanordnungen der eingangs genannten Art sind aus dem Stand der Technik bekannt. So offenbart beispielsweise die Offenlegungsschrift DE 10 2008 021 099 A1 eine Dämpferanordnung der eingangs genannten Art. Zwischen einer Fronthaube und einem im Innenraum angeordneten Rahmenelement ist ein elastisch verformbares Dämpferelement in Form einer Dichtung angeordnet. Beim Schließen des Klappenelements wird das Klappenelement auf das Dämpferelement aufgelegt. Dadurch wird zum einen erreicht, dass eine wasserdichte Trennung zwischen Innenraum und Umwelt hergestellt ist, und dass zum anderen das Dichtelement aufpralldämpfend für die Fronthaube durch seine elastische Verformbarkeit wirkt. Weil das Dämpferelement derart angeordnet ist, dass die Frontklappe auf das Dämpferelement aufgelegt wird, entsteht eine auf das Dämpferelement wirkende Vorspannkraft, die in Richtung der Bewegungsrichtung des Klappenelements wirkt.

Eine ähnliche Dämpferanordnung ist auch aus der Offenlegungsschrift US 5 149 169 A bekannt. Auch hier ist in Bewegungsrichtung des Klappenelements ein Dämpferelement zwischengeschaltet, das in der geschlossenen Stellung des Klappenelements mit einer Vorspannkraft in Bewegung des Klappenelements beaufschlagt ist.

Weitere Dämpferanordnungen sind auch aus den Offenlegungsschriften DE 197 35 440 A1 und DE 198 11 189 C1 bekannt.

Der Erfindung liegt die Aufgabe zugrunde, eine Dämpferanordnung zu schaffen, die in einfacher und kostengünstiger Weise die Dämpfungsfunktion verbessert und insbesondere ein Flattern des Klappenelements insbesondere während der Fahrt des Kraftfahrzeugs verhindert. Während bei den vorbekannten Dämpferanordnungen die Dämpfungswirkung des Dämpferelements nur in eine Richtung auf das Klappenelement wirkt, nämlich in Vorspannrichtung, bietet die vorliegende Erfindung den Vorteil, dass die Dämpfungswirkung in zwei Richtungen senkrecht zur Vorspannrichtung wirkt und dadurch das Flattern des Klappenelements auch bei höheren Belastungen sicher verhindert. Erfindungsgemäß ist hierzu vorgesehen, dass die Vorspannkraft, die auf das Dämpferelement in der Schließstellung des Klappenelements wirkt, zumindest im Wesentlichen quer zur Bewegungsrichtung des Klappenelements wirkt. Weil die Vorspannkraft zwischen dem Klappenelement und dem Rahmenelement wirkt, ergibt sich hieraus, dass das Dämpferelement nicht im Bewegungsweg zwischen dem Klappenelement und dem Rahmenelement liegt, sondern seitlich dazu. Wird das Klappenelement in die Schließstellung bewegt, so wird es an dem Dämpferelement unter Berührung des Dämpferelements vorbei bewegt, wobei das Dämpferelement durch das Klappenelement bei der Bewegung quer zur Bewegungsrichtung vorgespannt wird. Durch die Vorspannung quer zur Bewegungsrichtung beziehungsweise parallel zur Schwenkachse des Klappenelements wird erreicht, dass unabhängig davon, in welche Richtung das Klappenelement bewegt wird, die Bewegung durch das Dämpferelement aufgrund der Vorspannkraft nunmehr seitlich auf das Klappenelement wirkt. Dadurch ist ein Flattern des Klappenelements in jedem Fall sicher verhindert.

Gemäß einer bevorzugten Weiterbildung der Erfindung ist vorgesehen, dass das Dämpferelement an dem Rahmenelement befestigt ist und horizontal oder parallel zu einer Schwenkachse des Klappenelements von dem Rahmenelement vorsteht. Durch die Befestigung des Dämpferelements an dem Rahmenelement ist das Dämpferelement sicher an der Fahrzeugkarosserie gehalten und kann bauraumsparend an dieser platziert werden. Dadurch, dass es horizontal ausgerichtet ist, oder parallel zu der Schwenkachse des Klappenelements, ist sichergestellt, dass es elastisch parallel zur Schwenkachse und damit senkrecht zur Bewegungsrichtung des Klappenelements verformbar ist, um die gewünschte Vorspannkraft in der Schließstellung des Klappenelements zu bewirken.

Weiterhin ist bevorzugt vorgesehen, dass das Klappenelement eine Dämpferwand aufweist, die sich zumindest im Wesentlichen senkrecht zur Klappenebene oder zumindest im Wesentlichen vertikal erstreckt und in der geschlossenen Stellung des Klappenelements mit dem Dämpferelement zusammenwirkt. Die Dämpferwand stellt somit das mit dem Dämpferelement zusammenwirkende Element dar, welches die Oberfläche bietet, gegen welche das Dämpferelement gepresst ist, wenn die Klappe sich in der Schließstellung befindet. In Abhängigkeit von der Oberflächenbeschaffenheit der Dämpferwand und/oder des Dämpferelements können unterschiedlich hohe Dämpferkräfte realisiert werden. Die Dämpfung erfolgt aufgrund der Vorspannung quer zur Bewegungsrichtung des Klappenelements durch die zwischen dem Dämpferelement und der Dämpferwand oder dem Klappenelement erzeugte Haftreibung, die durch die Oberflächenbeschaffenheit sowie die Materialwahl von Dämpferwand und Dämpferelement variierbar ist.

Alternativ ist das Dämpferelement gemäß einer weiteren Ausführungsform an dem Klappenelement befestigt. Entsprechend ist dann die Dämpferwand an dem Rahmenelement befestigt. Die Funktionsweise entspricht der oben stehend Beschriebenen. Es ergeben sich dieselben Vorteile.

Weiterhin ist bevorzugt vorgesehen, dass die Dämpferwand eine Einführschräge für das Dämpferelement aufweist. Dadurch wird gewährleistet, dass beim Verbringen des Klappenelements in die Schließstellung weder das Dämpferelement noch die Dämpferwand beschädigt werden. Stattdessen wird durch die Einführschräge ein sanftes Einfangen des Dämpferelements beim Schließen des Klappenelements realisiert.

Gemäß einer weiteren Ausführungsform der Erfindung weist das Dämpferelement bevorzugt eine Einführschräge für die Dämpferwand auf. Die Einführschräge des Dämpferelements kann alternativ oder zusätzlich zu der Einführschräge der Dämpferwand vorhanden sein. Durch die Einführschräge des Dämpferelements ergeben sich die zuvor bereits genannten Vorteile. Insbesondere eine Beschädigung des verformbaren Dämpferelements wird hierdurch sicher verhindert. Auch Verschleißerscheinungen werden reduziert, so dass die Dämpferanordnung eine hohe Lebenserwartung erfüllt. Die Einführschräge kann insoweit auch als Zentrierschräge für das Klappenelement und/oder als Anlaufschräge für das Dämpferelement verstanden werden. Zweckmäßigerweise weist die Dämpferanordnung zwei derartig ausgebildet und angeordnete Dämpferelemente auf, die mit dem Klappenelement wie zuvor beschrieben zusammenwirken. Vorzugsweise sind dabei die Dämpferelemente unterschiedlichen Längsseiten des Klappenelements zugeordnet, so dass die in der Schließstellung erzeugten Vorspannkräfte in entgegengesetzte Richtungen wirken. Dadurch wird eine Zentrierung und Ausrichtung des Klappenelements in der Schließstellung unterstützt.

Weiterhin ist bevorzugt vorgesehen, dass dem Dämpferelement eine Einrichtung zum Variieren der Vorspannkraft zugeordnet ist. Durch die Einrichtung ist die Vorspannkraft im laufenden Betrieb oder beispielsweise bei Werkstattbesuchen einstellbar, um beispielsweise lebensdauerbedingte Vorspannkraft-Reduzierungen zu kompensieren. Auch kann die Einrichtung dazu genutzt werden, während des Betriebs die Vorspannkraft zu variieren. Insbesondere wird in Abhängigkeit von der Höhe der zu erwartenden Belastung auf das Klappenelement die Vorspannkraft variiert.

Zum Variieren der Vorspannkraft ist die Einrichtung insbesondere dazu ausgebildet, die Position des Dämpferelements einzustellen. Um die Vorspannkraft zu erhöhen wird das Dämpferelement insbesondere näher zu der Dämpferwand bewegt, zum Reduzieren der Vorspannkraft von der Dämpferwand weg. Auf diese Weise ist einfach und kostengünstig die Vorspannkraft an die Lebensdauer und/oder aktuelle Betriebsverhältnisse anpassbar.

Bevorzugt ist das Dämpferelement aus Gummi gefertigt oder weist Gummi auf. Hierdurch ist eine einfache und kostengünstige Realisierung des Dämpferelements geboten.

Weiter ist bevorzugt vorgesehen, dass das Dämpferelement formschlüssig an dem Rahmenelement gehalten ist. Hierdurch ergibt sich eine einfache und sichere Befestigung des Dämpferelements an dem Rahmenelement oder an dem Klappenelement. Insbesondere ist das Dämpferelement unter elastischer Verformung auf das Dämpferelement aufgesteckt oder aufgeschoben. Vorzugsweise weist das Rahmenelement oder Klappenelement dazu entsprechende Rastvorsprünge auf, die mit dem Dämpferelement zusammenwirken. Insbesondere weist das Rahmenelement oder das Klappenelement eine oder mehrere Längsnuten oder Längsschienen auf, die mit einem Hinterschnitt versehen sind, der von dem Dämpferelement hintergreifbar ist und in der befestigten Position hintergriffen wird. Dadurch ist eine einfache und kostengünstige Montage sowie eine dauerhafte Befestigung des Dämpferelements sicher gewährleistet. Vorzugsweise sind die ein oder mehreren Längsnuten oder die ein oder mehreren Längsschienen quer zur Bewegungsrichtung des Klappenelements beziehungsweise horizontal ausgerichtet, um eine hohe Haltekraft für das Dämpferelement zu gewährleisten und damit eine hohe Vorspannkraft dauerhaft zur Verfügung zu stellen.

Im Folgenden soll die Erfindung anhand der Zeichnung näher erläutert werden. Dazu zeigen:
- Figur 1: ein Kraftfahrzeug in einer vereinfachten Darstellung,
- Figur 2: eine Dämpferanordnung des Kraftfahrzeugs in einer Schnittdarstellung.

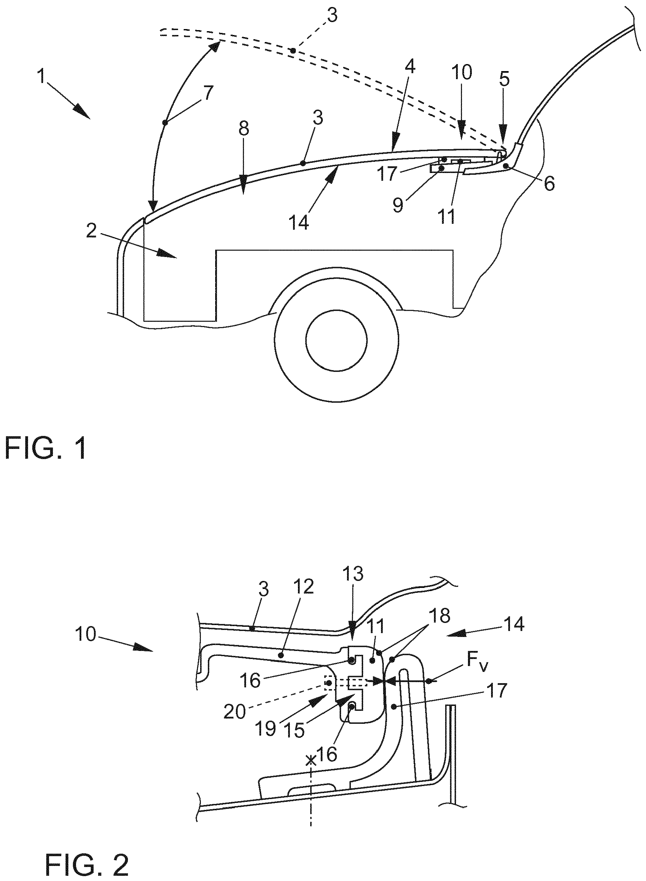

Figur 1 zeigt in einer vereinfachten Schnittdarstellung ein Kraftfahrzeug 1, das in Fahrtrichtung vorne einen Innenraum 2 aufweist, der durch ein Klappenelement 3 zugängig ist. In dem Innenraum ist gemäß dem vorliegenden Ausführungsbeispiel ein Motor des Kraftfahrzeugs 1 angeordnet, so dass es sich bei dem Innenraum 2 um den Motorraum des Kraftfahrzeugs handelt. Weil das Klappenelement 3 in Fahrtrichtung vorne an dem Kraftfahrzeug 1 angeordnet ist, handelt es sich um eine Frontklappe 4, genauer gesagt um eine Motorhaube. Das Klappenelement 3 ist vorliegend an seinem in Fahrtrichtung hinten liegenden Ende 5 verschwenkbar an einer Karosserie 6 des Kraftfahrzeugs 1 gelagert, so dass sein in Fahrtrichtung vorne liegendes Ende zwischen einer den Innenraum 2 freigebenden Stellung (gestrichelte Linien) und einer den Innenraum 2 verschließenden Schließstellung (durchgezogene Linien) verschwenkbar ist, wie durch einen Doppelpfeil 7 gezeigt. In der geschlossenen Stellung verschließt das Klappenelement 3 eine Rahmenöffnung 8 zu dem Innenraum 2, in welcher ein Rahmenelement 9 einer Fahrzeugkarosserie angeordnet ist und beispielsweise die Rahmenöffnung 8 seitlich begrenzt.

Das Klappenelement 3 ist in der Schließstellung durch einen Schließmechanismus gehalten, wie beispielsweise eine Drehfalle. Um ein Flattern des Klappenelements 3, das durch Fahrtwind oder Vibrationen im Kraftfahrzeug während des Fahrbetriebs erzeugt werden kann, zu verhindern, weist das Kraftfahrzeug 1 außerdem eine Dämpferanordnung 10 auf, die ein zwischen dem Plattenelement 3 und dem Rahmenelement 9 wirkendes Dämpferelement 11 aufweist.

Figur 2 zeigt die Dämpferanordnung 10 in einer vereinfachten Querschnittdarstellung des Kraftfahrzeugs 1. An der Unterseite beziehungsweise der dem Innenraum 2 zugewandten Seite des Klappenelements 3 ist ein Haltelement 12 befestigt, das ein dem Rahmenelement 9 zugewandtes Ende 13 aufweist. Dabei ist das Ende 13 einer Längsseite 14 des Klappenelements beziehungsweise des Rahmenelements zugeordnet. An dem Ende 13 ist das zuvor bereits erwähnte Dämpferelement 11 formschlüssig gehalten. Dazu weist das Ende 13 eine Schiene 15 auf, die mit Hintergriffen 16 ausgestattet ist. Das Dämpferelement 11 ist auf die Schiene 15 derart aufgeschoben, dass es die Hintergriffe 16 hintergreift und dadurch formschlüssig an dem Ende 13 beziehungsweise dem Klappenelement 3 gehalten ist.

Wie aus Figur 1 ersichtlich, erstreckt sich damit das Dämpferelement 13 parallel zur Längserstreckung des Kraftfahrzeugs 1 beziehungsweise des Klappenelements 3 oder des Rahmenelements 9. Dabei ist das Dämpferelement 11 derart an dem Ende 13 befestigt, dass es seitlich, also zur Seite des Kraftfahrzeugs beziehungsweise des Klappenelements 3 vorsteht.

An dem Rahmenelement 9 ist eine Dämpferwand 17 befestigt, die in der Schließstellung des Klappenelements 3 mit dem Dämpferelement 11 zusammenwirkt. Dazu ragt die Dämpferwand 17 von dem Rahmenelement 9 im Wesentlichen vertikal nach oben in Richtung des Klappenelements 3. Die Dämpferwand 17 ist insoweit zumindest im Wesentlichen vertikal ausgerichtet beziehungsweise parallel zum Bewegungsweg des Klappenelements 3. Der seitliche Abstand zwischen Dämpferelement 11 und Dämpferwand 17 ist im geöffneten Zustand des Klappenelements 3, in der Schnittdarstellung von Figur 2 betrachtet, negativ, so dass dann, wenn das Dämpferelement 11 durch die Bewegung der Klappe 3 auf die Dämpferwand 17 aufgeschoben wird, das Dämpferelement 11 elastisch verformt beziehungsweise komprimiert wird. Dadurch entsteht eine Vorspannung mit einer Vorspannkraft *Fᵥ* zwischen Dämpferwand 17 und Dämpferelement 11, die parallel zur Schwenkachse des Klappenelements 3 beziehungsweise quer zur Längserstreckung des Kraftfahrzeugs 1 und zumindest im Wesentlichen horizontal wirkt. Durch die Vorspannkraft *Fᵥ* entsteht eine Haftreibung zwischen dem Dämpferelement 11 und der Dämpferwand 17, welche zur Kraftübertragung dient. Durch die Haftreibung des Dämpferelements 11 ist damit die Bewegung des Klappenelements 3 gedämpft und ein Flattern des Klappenelements 3 insbesondere an dessen in Vorwärtsfahrrichtung hinten liegenden Hinterkante einfach und sicher verhindert.

Vorzugsweise weist das Kraftfahrzeug 1 zumindest zwei dieser Dämpferanordnungen 10 auf, die an den beiden Längsseiten des Klappenelements 3 vorhanden sind, um das Klappenelement 3 gleichmäßig mit der Dämpfungskraft in der Schließstellung zu beaufschlagen.

Um ein einfaches Schließen des Klappenelements 3 zu gewährleisten, weisen die Dämpferwand 17 und das Dämpferelement 11 jeweils eine Einführschräge 18 beziehungsweise 19 auf, die eine lange Lebensdauer mit geringem Verschleiß insbesondere des Dämpferelements 11, das bevorzugt aus Gummi gefertigt ist, erlauben.

Durch das Vorsehen von zwei Dämpferanordnungen 10, eine an jeweils einer Längsseite des Klappenelements 3, bewirken diese außerdem eine Selbstzentrierung des Klappenelements 3 beim Schließen des Klappenelements.

Optional ist dem jeweiligen Dämpferelement 11 eine Einrichtung 19 zugeordnet, mittels welcher der Abstand des Dämpferelements 11 zu dem Halteelement 12 seitlich einstellbar ist. Dazu weist die Einrichtung 19 beispielsweise eine Einstellschraube 20 auf, die mit dem Dämpferelement 11 derart zusammenwirkt, dass wenn die Einstellschraube 20 gedreht wird, das Dämpferelement 11 seitlich weiter raus oder zurückgezogen wird, um die Vorspannkraft *Fᵥ* zu erhöhen oder zu reduzieren. Auch kann die Einrichtung 19 einen elektrisch ansteuerbaren Aktuator aufweisen, welcher die Position des Dämpferelements 11 bei Bedarf auch während des Betriebs des Kraftfahrzeugs 1 verändert, beispielsweise um bei höheren Geschwindigkeiten die Vorspannkraft *Fᵥ* zu erhöhen.

### Bezugszeichenliste

- 1: Kraftfahrzeug
- 2: Innenraum
- 3: Klappenelement
- 4: Frontklappe
- 5: Ende
- 6: Karosserie
- 7: Doppelpfeil
- 8: Rahmenöffnung
- 9: Rahmenelement
- 10: Dämpferanordnung
- 11: Dämpferelement
- 12: Halteelement
- 13: Ende
- 14: Längsseite
- 15: Schiene
- 16: Hintergriff
- 17: Dämpferwand
- 18: Einführschräge
- 19: Einrichtung
- 20: Einstellschraube

- *Fᵥ*: Vorspannkraft

## Patentansprüche

1. Dämpferanordnung (10) für ein Kraftfahrzeug (1), das zumindest einen Innenraum (2), insbesondere einen Motorraum, und zumindest ein beweglich gelagertes Klappenelement (3), insbesondere eine Fronthaube, zum Freigeben oder Verschließen des Innenraums (2), aufweist, mit zumindest einem elastisch verformbaren Dämpferelement (11), das zwischen dem Klappenelement (3) und einem dem Innenraum (2) zugeordneten Rahmenelement (9) in einer den Innenraum (2) verschließenden Schließstellung des Klappenelements (3) mit einer Vorspannkraft (*Fᵥ*) verspannt ist, **dadurch gekennzeichnet, dass** die Vorspannkraft (*Fᵥ*) zumindest im Wesentlichen quer zur Bewegungsrichtung des Klappenelements (3) wirkt.

2. Dämpferanordnung nach Anspruch 1, **dadurch gekennzeichnet, dass** das Dämpferelement (11) an dem Rahmenelement (9) befestigt ist und horizontal oder parallel zu einer Schwenkachse des Klappenelements (3) von dem Rahmenelement (9) vorsteht.

3. Dämpferanordnung nach Anspruch 1, **dadurch gekennzeichnet, dass** das Klappenelement (3) eine Dämpferwand (17) aufweist, die sich zumindest im Wesentlichen parallel zur Bewegungsrichtung des Klappenelements (3) oder zumindest im Wesentlichen vertikal erstreckt und in der Schließstellung des Klappenelements (3) mit dem Dämpferelement (11) zusammenwirkt.

4. Dämpferanordnung nach Anspruch 1, **dadurch gekennzeichnet, dass** das Dämpferelement (11) an dem Klappenelement (3) befestigt ist.

5. Dämpferanordnung nach einem der vorhergehenden Ansprüche, **dadurch gekennzeichnet, dass** die Dämpferwand (17) eine Einführschräge (18) für das Dämpferelement (11) aufweist.

6. Dämpferanordnung nach einem der vorhergehenden Ansprüche, **dadurch gekennzeichnet, dass** das Dämpferelement (11) eine Einführschräge (18) für die Dämpferwand (17) aufweist.

7. Dämpferanordnung nach einem der vorhergehenden Ansprüche, **dadurch gekennzeichnet, dass** dem Dämpferelement (11) eine Einrichtung (19) zum Variieren der Vorspannkraft (*Fᵥ*) zugeordnet ist.

8. Dämpferanordnung nach einem der vorhergehenden Ansprüche, **dadurch gekennzeichnet, dass** die Einrichtung (19) dazu ausgebildet ist, die Position des Dämpferelements (11) einzustellen.

9. Dämpferanordnung nach einem der vorhergehenden Ansprüche, **dadurch gekennzeichnet, dass** das Dämpferelement (11) aus Gummi gefertigt ist.

10. Dämpferanordnung nach einem der vorhergehenden Ansprüche, **dadurch gekennzeichnet, dass** das Dämpferelement (11) formschlüssig an dem Rahmenelement (9) oder dem Klappenelement (3) gehalten, insbesondere unter elastischer Verformung aufgesteckt oder aufgeschoben, ist.
